Europäisches Patentamt

European Patent Office

Office européen des brevets

(19)

(11) Numéro de publication : **0 444 978 A2**

# (12) DEMANDE DE BREVET EUROPEEN

(21) Numéro de dépôt : 91400206.8

(51) Int. Cl.⁵ : **G01D 5/12**

(22) Date de dépôt : 29.01.91

(30) Priorité : 23.02.90 FR 9002251

(43) Date de publication de la demande :
04.09.91 Bulletin 91/36

(84) Etats contractants désignés :
**DE ES GB IT SE**

(71) Demandeur : **S.N.R. ROULEMENTS**
**Boîte Postale 17 1, rue des Usines**
**F-74010 Annecy Cédex (FR)**

(72) Inventeur : **Alff, Denis**
**91, Boulevard du Fier**
**F-74000 Annecy (FR)**
Inventeur : **Hajzler, Christian**
**11, rue de Rumilly**
**F-74000 Annecy (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) Codeur annulaire composite et procédé de fabrication de celui-ci.

(57)    Codeur annulaire composite constitué par un disque métallique (1) annulaire denté en partie enrobé par une matière thermoplastique, caractérisé par le fait que la matière thermoplastique est conformée en un anneau (2) portant des dents périphériques (21) dont les flancs radiaux opposés (22, 23) sont en appui sur les flancs correspondants des dents (11) du disque métallique (1) et dont le sommet et le fond sont séparés par un jeu radial (j1, j2) du sommet et du fond de la dent (11) adjacente.

EP 0 444 978 A2

FIG 1

# CODEUR ANNULAIRE COMPOSITE ET PROCEDE DE FABRICATION DE CELUI-CI

L'invention a pour objet un codeur annulaire composite constitué par un disque métallique annulaire qui possède une denture enrobée par une matière thermoplastique séparée du sommet et du fond de la denture par un jeu radial.

L'invention a aussi pour objet un codeur annulaire composite rigide réalisé par assemblage d'un disque métallique avec une matière thermoplastique exempt de contraintes internes.

L'invention a encore pour objet le procédé de fabrication d'un codeur magnétique annulaire multipolaire assemblé, constitué par un élément thermoplastique moulé chargé de ferrite magnétisée et par un disque annulaire denté concentrique qui possède une portée de montage réalisée par emboutissage du corps du disque.

Un tel codeur magnétique trouve principalement une application dans les roulements à capteurs d'informations dans le but de créer un générateur d'impulsions.

Selon l'invention, on place dans l'empreinte d'un moule le disque annulaire denté soumis, si besoin était, à une opération préalable d'emboutissage pliage de la partie dénudée dans lequel on injecte la matière thermoplastique qui se répartit concentriquement au disque et entre la denture de celui-ci pour réaliser un anneau surmoulé séparé de chaque fond et sommet de dent du disque par un jeu radial avant de lui faire subir un processus de magnétisation.

La résistance mécanique et la précision de la liaison entre le disque et l'anneau sont alors parfaitement assurées. L'avantage du procédé réside dans le fait qu'il évite la création de contraintes résiduelles consécutives au procédé de moulage et permet la dilatation différentielle du disque et de l'anneau imbriquées sans fausser le positionnement, ni créer de contraintes dans les matériaux en présence.

Le codeur annulaire ainsi obtenu peut être monté sur tout organe extérieur par l'intermédiaire du disque métallique, ce dernier se montant sur l'organe indifféremment par frettage, collage, rivetage ou tout autre procédé connu.

D'autres avantages de l'invention apparaîtront à la lecture de la description qui suit, faite en référence au dessin annexé dans lequel :

   – La figure 1 est une vue en coupe axiale du codeur annulaire,

   – La figure 2 est une vue en coupe radiale à plus grande échelle du codeur selon la ligne II-II de la figure 1,

   – La figure 3 est une représentation schématique du moule de fabrication du codeur représenté à la figure 1,

   – La figure 4 est une vue en coupe radiale du codeur magnétique avec une portée de montage réalisée à la périphérie du disque métallique,

   – La figure 5 est une vue en coupe axiale d'une variante de réalisation du codeur,

   – La figure 6 est une vue en coupe radiale du codeur selon la ligne VI-VI de la figure 5,

   – La figure 7 est un schéma synoptique des phases de réalisation du codeur.

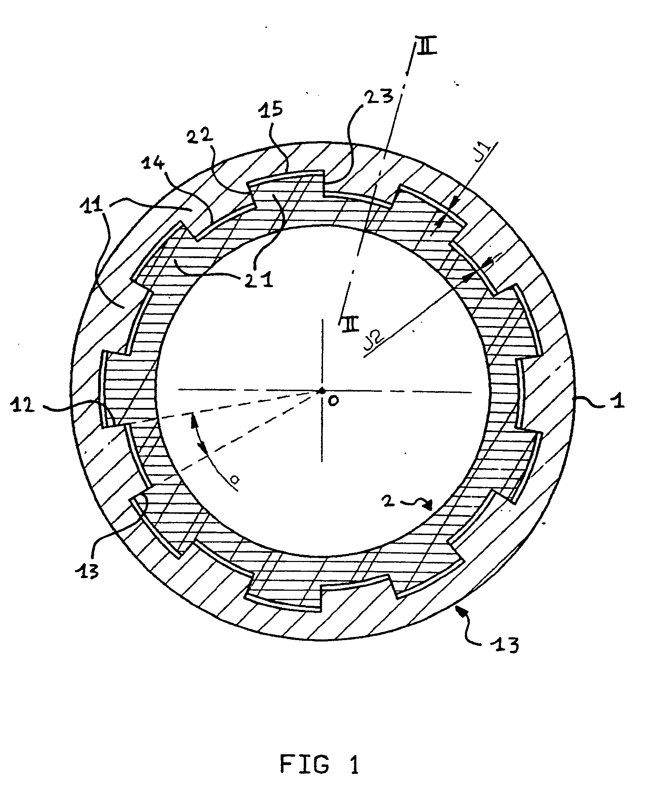

Le codeur annulaire représenté à la figure 1 possède un disque métallique 1 découpé dont la circonférence intérieure possède une pluralité des dents 11 dont les flancs opposés 12, 13, sont situés dans des plans radiaux d'angle ouverture $\hat{a}$ passant par l'axe O du disque.

Le sommet 14 et le fond 15 de chaque dent 11 sont curvilignes en correspondance avec des portions d'arc centré sur l'axe O de la pièce.

Dans le disque est encastré un anneau plastique 2 moulé portant des dents périphériques 21 dont les flancs opposés 22, 23 sont en appui sur les flancs correspondants des dents 11. Le fond et le sommet de chaque dent 21 sont séparés par un jeu radial j2 et j1 du sommet 14 et du fond 15 de la dent 11 adjacente.

A la suite d'une dilatation différentielle entre le disque 1 et l'anneau 2, chaque point du disque 11 se déplace radialement et les jeux j1 et j2 varient sans création de contraintes circonférentielles dans l'anneau.

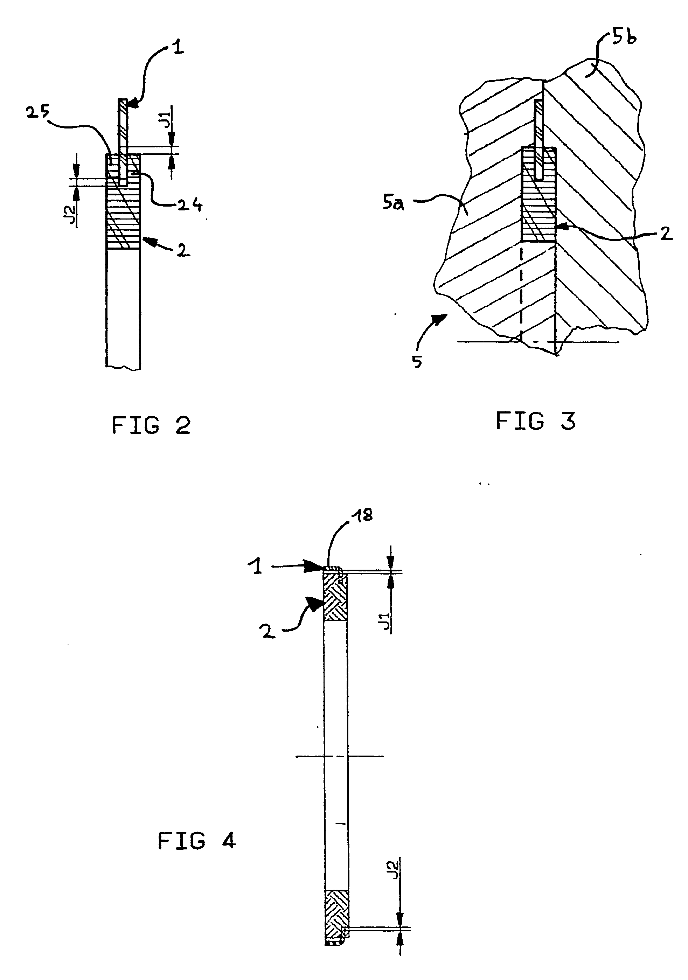

Le maintien axial de l'anneau plastique 2 est assuré conformément à la figure 2 par des couronnes circulaires 24, 25, disposées axialement de part et d'autre des dents 11 et moulées avec ledit anneau.

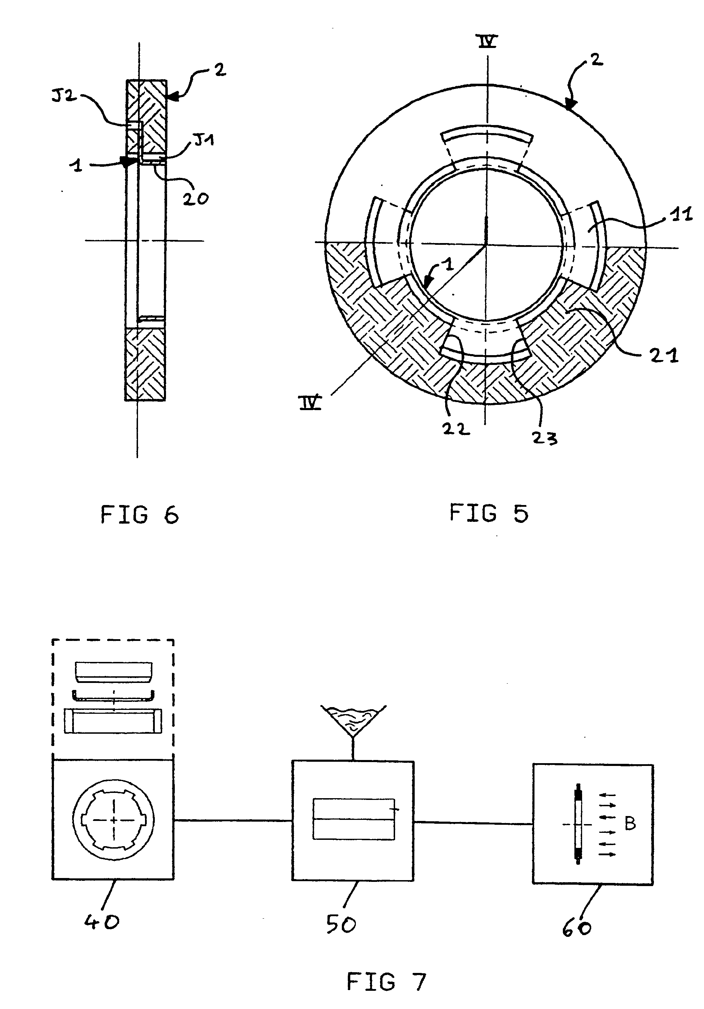

Le disque métallique 1 possède également une partie dénudée extérieure (fig. 1 ou 2) ou intérieure (fig. 5, 6) destinée à la réalisation de portées de montage du codeur au cours d'une opération d'emboutissage.

La figure 3 représente schématiquement le moule de fabrication 5 dont les parties 5a, 5b contiennent l'empreinte de réception du disque annulaire denté 1 et la cavité de réception de la matière thermoplastique destinée au surmoulage de l'anneau 2.

La mise en oeuvre du procédé s'applique avantageusement au disque annulaire 1 avec une denture intérieure conformément aux figures 1, 2, 4.

L'anneau thermoplastique 2 est avantageusement moulé à l'intérieur du disque annulaire 1.

Le jeu radial j1 et j2 se forme alors au cours du refroidissement de l'anneau 2 par rétreint naturel de la matière après moulage.

Les figures 5, 6 décrivent un codeur annulaire dans lequel l'anneau thermoplastique extérieur 2 possède également une charge de ferrite de manière à réaliser un anneau magnétique multipolaire.

Selon cette variante de réalisation, le procédé de surmoulage de l'anneau 2 nécessite la confection d'une empreinte de moule spécifique à la formation des jeux j1 et J2.

Après magnétisation de l'anneau, on réalise au niveau de la partie nue extérieure ou centrale du disque 1 la fixation ou l'accrochage sur un support tournant. A cet effet, le disque métallique 1 possède une portée 18 de montage extérieure représentée à la figure 4 ou une portée intérieure 20 représentée à la figure 6 en préservant l'écartement radial j1 entre la portée de montage et la périphérie externe (fig. 4) ou interne (fig. 5) de l'anneau 2. Cette portée peut être réalisée par emboutissage pliage de la partie dénudée du disque avant moulage.

La sélection de la charge de ferrite et le procédé de magnétisation de celle-ci ne font pas partie de la présente invention. On se référera par exemple à la publication US-A 3 169 567 qui décrit une composition de la matière convenable pour l'anneau et son procédé de magnétisation.

La figure 7 illustre le procédé de fabrication du codeur représenté par les phases successives principales :

- 40 découpage et emboutissage éventuel du disque 1,
- 50 moulage injection de l'anneau 2,
- 60 magnétisation,

**Revendications**

1°) Codeur annulaire composite constitué par un disque métallique (1) annulaire denté en partie enrobé par une matière thermoplastique, caractérisé par le fait que la matière thermoplastique est conformée en un anneau (2) portant des dents périphériques (21) dont les flancs radiaux opposés (22, 23) sont en appui sur les flancs correspondants des dents (11) du disque métallique (1) et dont le sommet et le fond sont séparés par un jeu radial (j1, j2) du sommet et du fond de la dent (11) adjacente.

2°) Codeur annulaire selon la revendication 1, caractérisé par le fait que l'anneau thermoplastique (2) est réalisé en un matériau thermoplastique chargé de ferrite et moulé sur le disque métallique (1) annulaire.

3°) Procédé de fabrication du codeur selon l'ensemble des revendications 1 et 2, caractérisé par le fait que l'on place dans l'empreinte d'un moule le disque métallique annulaire (1) denté avant d'injecter la matière thermoplastique qui se répartit concentriquement au disque et entre la denture de celui-ci pour réaliser après démoulage un anneau thermoplastique surmoulé chargé de ferrite, séparé de chaque fond et sommet de dent du disque par un jeu radial j1, j2 avant de lui faire subir un processus de magnétisation.

4°) Procédé de fabrication du codeur selon la revendication 3, caractérisé par le fait que l'anneau thermoplastique est moulé concentriquement à l'intérieur du disque métallique (1) et que les jeux radiaux J1 et J2 sont réalisés naturellement par rétreint du matériau thermoplastique après moulage.

FIG 1

FIG 2

FIG 3

FIG 4

FIG 6

FIG 5

FIG 7